# EUROPÄISCHE PATENTSCHRIFT

(11) **EP 2 447 109 B1**
(45) Veröffentlichungstag und Bekanntmachung des Hinweises auf die Patenterteilung: **20.04.2016**
(21) Anmeldenummer: 11186017.7
(22) Anmeldetag: 20.10.2011
(51) Int. Cl.: B60N 2/02, B60N 2/10, B60N 2/16, B60N 2/22, B60N 2/18

(54) **Verstellvorrichtung für eine zu verstellende Fahrzeugbaugruppe**
Adjustment device for a vehicle component to be adjusted
Dispositif de réglage pour un composant de véhicule devant être réglé

(30) Priorität: 27.10.2010 DE 102010049479
(43) Veröffentlichungstag der Anmeldung: 02.05.2012
(73) Patentinhaber: IMS Gear GmbH, 78166 Donaueschingen (DE)
(72) Erfinder: Jungert, Dieter, 71287 Weissach (DE); Gilbert, Tassilo, 75179 Pforzheim (DE); Heger, Thomas, 73547 Lorch-Waldhausen (DE); Andricevic, Nino, 70563 Stuttgart (DE); Fechler, Jens, 78183 Hüfingen (DE); Koop, Matthias, 78054 Villingen-Schwenningen (DE); Synovzik, Wilfried, 78183 Hüfingen (DE); Hofschulte, Wolfram, 79848 Bonndorf (DE); Oberle, Stephan, 78050 Villingen-Schwenningen (DE)
(74) Vertreter: Westphal, Mussgnug & Partner Patentanwälte mbB

(56) Entgegenhaltungen:
- DE-A1- 4 130 079
- DE-C1- 19 904 224
- US-A- 5 435 624
- US-A1- 2004 135 415

## Beschreibung

Die Erfindung betrifft eine Verstellvorrichtung für eine zu verstellende Fahrzeugbaugruppe, insbesondere für einen Fahrzeugsitz. Des Weiteren betrifft die Erfindung einen Fahrzeugsitz mit zumindest einer solchen Verstellvorrichtung gemäß dem Oberbegriff des Patentanspruchs 13.

Eine solche Verstellvorrichtung ist z.B. aus der US 5,435,624 bekannt. Zur Verstellung eines Fahrzeugsitzes ist ein Verstellmotor vorgesehen, der über ein Verstellgetriebe in eine dem Fahrzeugsitz zugeordnete Zahnschwinge eintreibt.

Eine andere Sitzverstellvorrichtung beschreibt die US 2004/0135415 A1. Allerdings ist dort keine Zahnschwinge vorgesehen.

Aus der DE 41 30 079 A1 sind Verstellvorrichtungen für Fahrzeugsitze bekannt, mithilfe derer an einem Fahrzeugsitz eine Neigungsverstellung oder Höhenverstellung ausgeführt werden kann. Die in diesem Stand der Technik offenbarten Verstellvorrichtungen umfassen einen Verstellmotor, der über ein Verstellgetriebe zur Verstellung des Fahrzeugsitzes in eine dem Fahrzeugsitz zugeordnete Zahnschwinge eintreibt. Das Verstellgetriebe wird nach diesem Stand der Technik von einer Antriebsschnecke, einem Schneckenrad und einer Verstellschnecke gebildet, wobei die Antriebsschnecke in das Schneckenrad und die Verstellschnecke in die Zahnschwinge eintreibt, und wobei das Schneckenrad und die Verstellschnecke auf einer gemeinsamen Welle angeordnet sind. Zur Lagerung der Verstellschnecke sowie des Schneckenrads und der die beiden Elemente aufnehmenden Welle dient nach der DE 41 30 079 A1 ein nur statisch belastbares Gehäuse in Kombination mit einem statisch und dynamisch belastbaren Gehäuse, wobei die Verstellschnecke und das Schneckenrad des Verstellgetriebes zusammen mit der die beiden Elemente aufnehmenden Welle in dem nur statisch belastbaren Gehäuse gelagert sind und über das statisch und dynamisch belastbare Gehäuse, welches das nur statisch belastbare Gehäuse teilweise umgibt, an der zu verstellenden Fahrzeugbaugruppe befestigt sind. Dadurch wird ein relativ komplexer und aufwendiger Aufbau der Verstellvorrichtung und ein hohes Gewicht der zu verstellenden Fahrzeugbaugruppe verursacht.

Hiervon ausgehend liegt der vorliegenden Erfindung die Aufgabe zu Grunde eine neuartige Verstellvorrichtung für eine zu verstellende Fahrzeugbaugruppe sowie einen neuartigen Fahrzeugsitz mit jeweils einem einfacheren Aufbau und geringerem Gewicht zu schaffen.

Diese Aufgabe wird durch eine Verstellvorrichtung gemäß Patentanspruch 1 gelöst. Erfindungsgemäß versteift das Verstellgetriebe die zu verstellende Fahrzeugbaugruppe strukturell, wobei eine Verstellschnecke des strukturell versteifend wirkenden Verstellgetriebes unmittelbar an der Zahnschwinge angreift.

Des Weiteren ist vorgesehen, dass das Verstellgetriebe eine von dem Verstellmotor antreibbare Antriebsschnecke aufweist, die in ein auf einer Welle befestigtes Zahnrad zur Verdrehung einer Welle und zur Verdrehung der ebenfalls auf der Welle befestigten Verstellschnecke eintreibt. Dabei ist die Welle an der auf einen Crashfall ausgelegten Strukturkomponente der zu verstellenden Fahrzeugbaugruppe gelagert.

Im Sinne der hier vorliegenden Erfindung wird vorgeschlagen, dass das Verstellgetriebe, welches eine unmittelbar an der Zahnschwinge angreifende Verstellschnecke aufweist, selbst Teil einer Strukturkomponente der zu verstellenden Fahrzeugbaugruppe ist und strukturell versteifend wirkt. Im Sinne der Erfindung wirkt demnach das Verstellgetriebe selbst als strukturell versteifende Baugruppe und überträgt im Crashfall Kräfte und Momente. Hierdurch können andere Strukturkomponenten kleiner bzw. leichter dimensioniert werden oder gar komplett entfallen, wodurch ein einfacherer Aufbau sowie eine Gewichteinsparung für die zu verstellenden Fahrzeugbaugruppe realisierbar ist.

Vorzugsweise ist die Verstellschnecke als selbsthemmende Verriegelungsschnecke ausgebildet. Die Verriegelung der zu verstellenden Fahrzeugbaugruppe erfolgt unmittelbar zwischen der Verstellschnecke und der Zahnschwinge. Das Verstellgetriebe ist vorzugsweise integraler Bestandteil einer auf einen Crashfall ausgelegten Strukturkomponente der zu verstellenden Fahrzeugbaugruppe.

Nach einer ersten vorteilhaften Weiterbildung ist die Verstellschnecke unmittelbar an einer auf einen Crashfall ausgelegten Strukturkomponente der zu verstellenden Fahrzeugbaugruppe gelagert. In diesem Fall bildet dann die Strukturkomponente der zu verstellenden Fahrzeugbaugruppe ein Verstellgetriebegehäuse, welches auch im Crashfall eine sichere Verriegelung der zu verstellenden Fahrzeugbaugruppe über die Verstellschnecke gewährleistet.

Nach einer zweiten, alternativen vorteilhaften Weiterbildung ist die Verstellschnecke in einem separaten Verstellgetriebegehäuse aufgenommen, wobei das separate Verstellgetriebegehäuse integraler Bestandteil der auf den Crashfall ausgelegten Strukturkomponente ist und dieselbe insbesondere im Crashfall strukturell versteift.

Der erfindungsgemäße Fahrzeugsitz ist in Patentanspruch 13 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen perspektivischen Ausschnitt aus einer erfindungsgemäßen Verstellvorrichtung nach einem ersten Ausführungsbeispiel der Erfindung zusammen mit einer Strukturkomponente einer von der Verstellvorrichtung zu verstellenden Fahrzeugbaugruppe;
- Fig. 2: die Darstellung der Fig. 1 mit einem entfernten plattenartigen Tragelement der Strukturkomponente der zu verstellenden Fahrzeugbaugruppe;
- Fig. 3: die Darstellung der Fig. 2 in einer anderen Perspektive;
- Fig. 4: einen perspektivischen Ausschnitt aus einer erfindungsgemäßen Verstellvorrichtung nach einem zweiten Ausführungsbeispiel der Erfindung zusammen mit einer Strukturkomponente einer von der Verstellvorrichtung zu verstellenden Fahrzeugbaugruppe;
- Fig. 5: die Darstellung der Fig. 4 mit einem entfernten plattenartigen Tragelement der Strukturkomponente der zu verstellenden Fahrzeugbaugruppe;
- Fig. 6: die Darstellung der Fig. 5 in einer anderen Perspektive;
- Fig. 7: die Darstellung der Fig. 5 mit einem teilweise entfernten Verstellgetriebegehäuse; und
- Fig. 8: die Darstellung der Fig. 5 mit einem vollständig entfernten Verstellgetriebegehäuse.

Die hier vorliegende Erfindung betrifft eine Verstellvorrichtung für eine zu verstellende Fahrzeugbaugruppe, insbesondere für einen zu verstellenden Fahrzeugsitz.

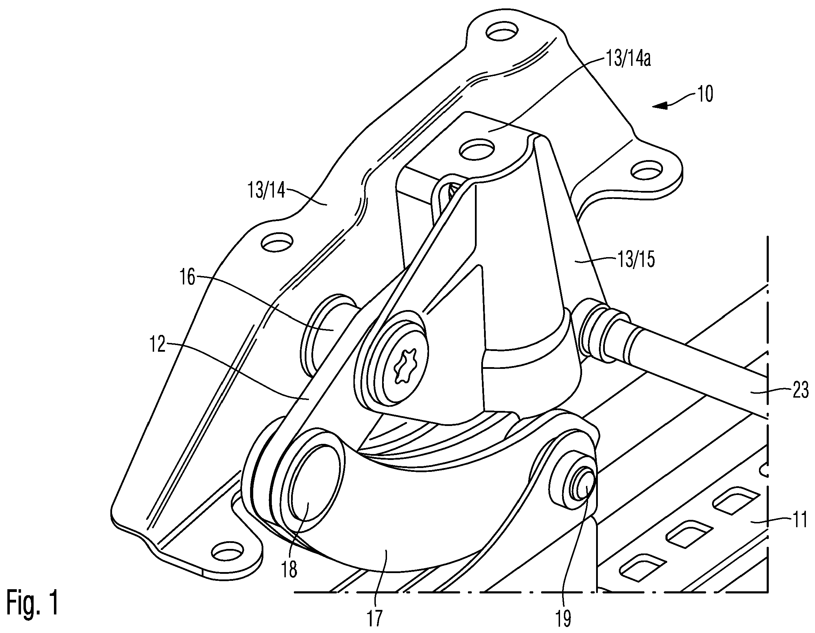

Fig. 1 bis 3 zeigen unterschiedliche Ansichten eines ersten bevorzugten Ausführungsbeispiels einer erfindungsgemäßen Verstellvorrichtung 10 für einen Fahrzeugsitz, wobei vom Fahrzeugsitz eine Verstellschiene 11 und eine Strukturkomponente 13 gezeigt ist.

Die erfindungsgemäße Verstellvorrichtung verfügt über einen in Fig. 1 bis 3 nicht gezeigten Verstellmotor, der über ein Verstellgetriebe zur Verstellung der zu verstellenden Fahrzeugbaugruppe in eine Zahnschwinge 12 eintreibt, die der zu verstellenden Fahrzeugbaugruppe zugeordnet ist.

Die Zahnschwinge 12, in die der Verstellmotor über das Verstellgetriebe eintreibt, ist unmittelbar an der zu verstellenden Fahrzeugbaugruppe gelagert, nämlich an einer auf einen Crashfall ausgelegten Strukturkomponente 13 der zu verstellenden Fahrzeugbaugruppe, die im Ausführungsbeispiel der Fig. 1 bis 3 von zwei im Wesentlichen parallel zueinander verlaufenden, plattenartigen Tragelementen 14, 15 und dem Tragelement 14a gebildet ist. Das Tragelement 14a ist integraler Bestandteil des plattenartigen Tragelements 14. Zwischen diesen beiden plattenartigen Tragelementen 14 und 15 der Strukturkomponente 13 der zu verstellenden Fahrzeugbaugruppe erstreckt sich ein Bolzen 16, an welchem die Zahnschwinge 12 gelagert ist. Dieser Bolzen 16 ist mit beiden Enden an jeweils einer der beiden plattenartigen Tragelemente 14 und 15 der Strukturkomponente 13 der zu verlagernden Fahrzeugbaugruppe befestigt. Das plattenartige Tragelement 14 der Strukturkomponente 13 ist dann, wenn es sich bei der zu verstellenden Fahrzeugbaugruppe um einen Fahrzeugsitz handelt, unmittelbar an in Fig. 1 bis 3 nicht gezeigten einer Sitzrahmenstruktur und/oder nicht gezeigten Lehnenrahmenstruktur des Fahrzeugsitzes befestigt.

Im Ausführungsbeispiel der Fig. 1 bis 3 ist die Zahnschwinge 12 über einen Schwinghebel 17 an die Verstellschiene 11 des zu verstellenden Fahrzeugsitzes angebunden, wobei der Schwinghebel 17 beidseitig Drehgelenke aufweist, nämlich an einer ersten Seite ein erstes Drehgelenk 18, über welches der Schwinghebel 17 an der Zahnschwinge 12 angreift, und an einer gegenüberliegenden zweiten Seite ein zweites Drehgelenk 19, über welches der Schwinghebel 17 an der Verstellschiene 11 angreift.

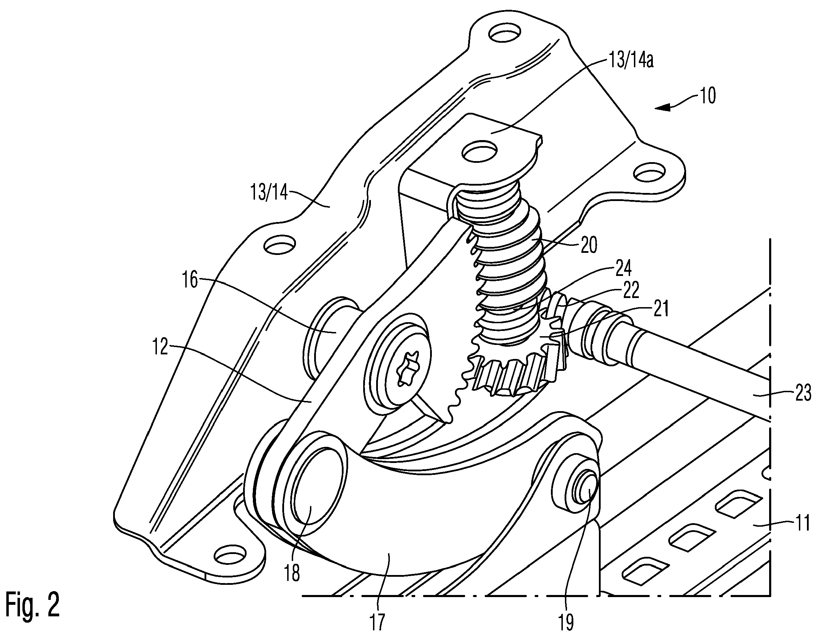

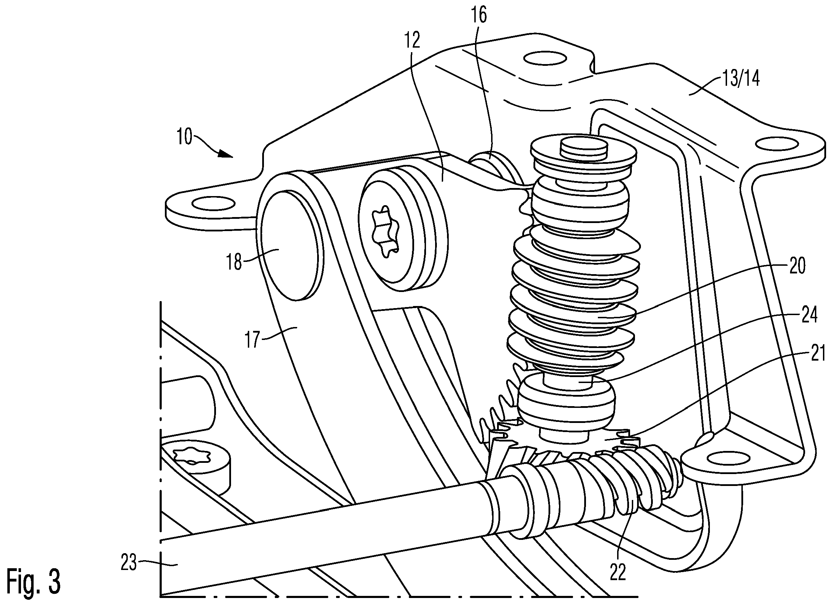

Wie am besten Fig. 2 und 3 entnommen werden kann, umfasst das Verstellgetriebe, über welches der Verstellmotor der Verstellvorrichtung in die Zahnschwinge 12 eintreibt, über eine Verstellschnecke 20, ein Zahnrad 21 sowie eine Antriebsschnecke 22. Der nicht gezeigte Antriebsmotor treibt über eine Flexwelle 23 die Antriebsschnecke 22 an, die in das Zahnrad 21 eintreibt, welches zusammen mit der Verstellschnecke 20 auf einer Welle 24 befestigt ist.

Durch Verdrehen der Antriebsschnecke 22 ist über das Zahnrad 21 die Welle 24 und damit die Verstellschnecke 20 verdrehbar, wobei die Verstellschnecke 20 unmittelbar in die Zahnschwinge 12 eintreibt, um die zu verstellende Fahrzeugbaugruppe, nämlich im gezeigten Ausführungsbeispiel den Fahrzeugsitz, zu verstellen.

Die Verstellschnecke 20, die unmittelbar in die Zahnschwinge 12 eintreibt, ist im Ausführungsbeispiel der Fig. 1 bis 3 unmittelbar an der zu verstellenden Fahrzeugbaugruppe, nämlich an der Strukturkomponente 13 der zu verstellenden Fahrzeugbaugruppe, gelagert. Die auf den Crashfall ausgelegte Strukturkomponente 13 der zu verstellenden Fahrzeugbaugruppe, nämlich die Tragelemente 14, 14a und 15 derselben, bildet ein Verstellgetriebegehäuse, welches auf den Crashfall ausgelegt und integraler Bestandteil der Strukturkomponente 13 ist.

Im Ausführungsbeispiel der Fig. 1 bis 3 ist nicht nur die Verstellschnecke 20 unmittelbar an der Strukturkomponente 13 des zu verstellenden Fahrzeugsitzes gelagert, vielmehr ist die Verstellschnecke 20 zusammen mit der Welle 24 und dem Zahnrad 21 unmittelbar an der Strukturkomponente 13 des zu verstellenden Fahrzeugsitzes gelagert. Wie bereits ausgeführt, bilden dabei die beiden parallel zueinander verlaufenden, plattenartigen Tragelemente 14 und 15 der auf den Crashfall ausgelegten Strukturkomponente 13 des Fahrzeugsitzes ein Verstellgetriebegehäuse.

Zwischen den beiden plattenartigen Tragelementen 14 und 15 der auf den Crashfall ausgelegten Strukturkomponente 13 der zu verstellenden Fahrzeugbaugruppe sind nicht nur die Verstellspindel 20, die Welle 24 und das Zahnrad 21 positioniert, vielmehr ragt auch die Antriebsschnecke 22 zumindest teilweise in den von den plattenartigen Tragelementen 14 und 15 definierten Gehäuseraum hinein.

Ferner ist die Zahnschwinge 12 mit einem Zähne aufweisenden Abschnitt zwischen den plattenartigen Tragelementen 14 und 15 positioniert. Dabei bilden die plattenartigen Tragelemente 14 und 15 der Strukturkomponente 13 seitliche Anschläge für die Zahnschwinge 12, wobei die plattenartigen Tragelemente 14 und 15 der Strukturkomponente 13 ein seitliches Verkippen der Zahnschwinge 12 verhindern.

Die Verstellschnecke 20 ist als selbsthemmende Verriegelungsschnecke ausgebildet und im Ausführungsbeispiel der Fig. 1 bis 3 unmittelbar an der auf den Crashfall ausgelegten, tragenden Strukturkomponente 13 gelagert. Die Verstellschnecke 20, die auch als selbsthemmende Verriegelungsschnecke dient, ist direkt in die Strukturkomponente 13 integriert.

Die auf dem Crashfall ausgelegte Strukturkomponente 13 des zu verstellenden Fahrzeugsitzes bildet im Ausführungsbeispiel der Fig. 1 bis 3 unmittelbar das Verstellgetriebegehäuse aus, welches auch im Crashfall eine sichere Verriegelung des zu verstellenden Fahrzeugsitzes über die Verstellschnecke 20 gewährleistet. Die Verriegelung des zu verstellenden Fahrzeugsitzes erfolgt unmittelbar zwischen der Verstellschnecke 20 und der Zahnschwinge 12.

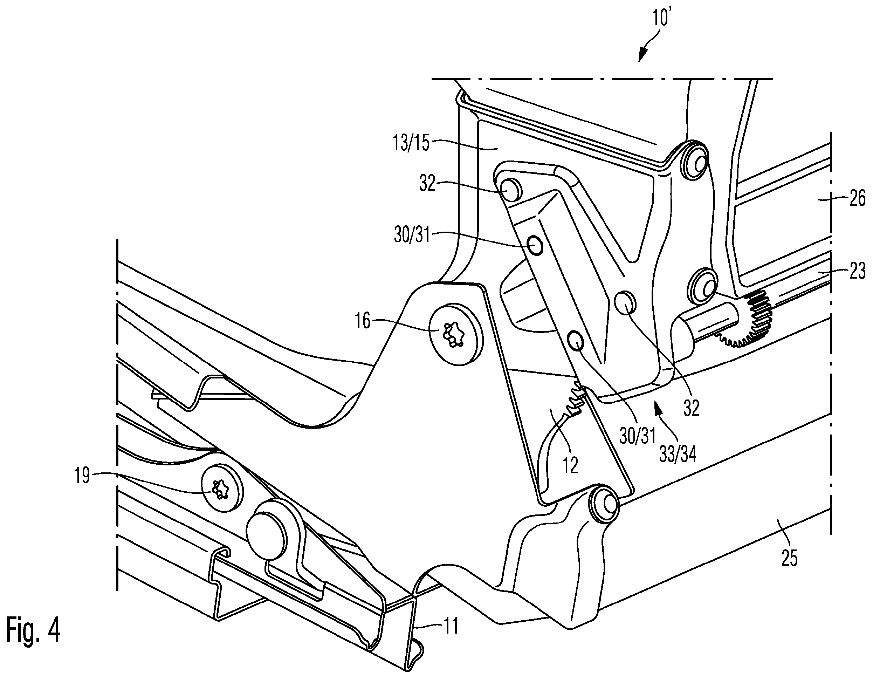

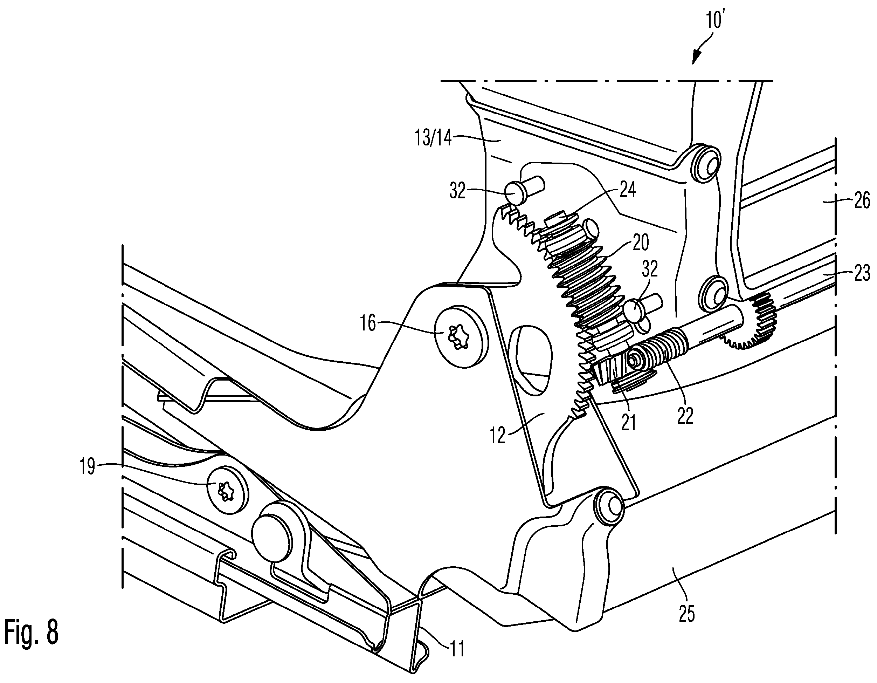

Ein zweites Ausführungsbeispiel einer erfindungsgemäßen Verstellvorrichtung 10' für eine zu verstellende Fahrzeugbaugruppe, insbesondere für einen Fahrzeugsitz, zeigen Fig. 4 bis 8. Zur Vermeidung unnötiger Wiederholungen werden im Zusammenhang mit dem Ausführungsbeispiel der Fig. 4 bis 8 für gleiche Baugruppen gleiche Bezugsziffern verwendet wie im Zusammenhang mit dem Ausführungsbeispiel der Fig. 1 bis 3. Nachfolgend wird vor allem auf solche Details eingegangen, durch die sich die Ausführungsbeispiele der Fig. 1 bis 3 und Fig. 4 bis 8 unterscheiden.

Die Verstellvorrichtung 10' des Ausführungsbeispiels der Fig. 4 bis 8 verfügt ebenso wie die Verstellvorrichtung 10 des Ausführungsbeispiels der Fig. 1 bis 3 über ein Verstellgetriebe, welches eine Verstellschnecke 20 umfasst, die unmittelbar an der Zahnschwinge 12 angreift und unmittelbar in die Zahnschwinge 12 eintreibt. Neben der Verstellschnecke 20 umfasst das Verstellgetriebe wiederum ein Zahnrad 21, das zusammen mit der Verstellschnecke 20 auf einer Welle 24 positioniert ist, wobei eine Antriebsschnecke 22 in das auf der Welle 24 positionierte Zahnrad 21 eintreibt und so die Welle 24 mit der auf der Welle 24 positionierten Verstellschnecke 20 verdreht. Auch im Ausführungsbeispiel der Fig. 4 bis 8 ist das Verstellgetriebe unmittelbar an der zu verstellenden Fahrzeugbaugruppe gelagert, nämlich an der auf dem Crash-Fall ausgelegten Strukturkomponente 13 der zu verstellenden Fahrzeugbaugruppe, die auch im Ausführungsbeispiel der Fig. 4 bis 8 wieder von zwei im Wesentlichen parallel zueinander verlaufenden, plattenartigen Tragelementen 14 und 15 gebildet wird.

In Fig. 4 bis 8 ist diese Strukturkomponente 13 zusammen mit einer Sitzrahmenstruktur 25 und einer Lehnenrahmenstruktur 26 des Fahrzeugsitzes gezeigt. Der Bolzen 16 sitzt im Lehendrehpunkt des Sitzes.

Auch im Ausführungsbeispiel der Fig. 4 bis 8 versteift das Verstellgetriebe wie im Ausführungsbeispiel der Fig. 1 bis 3 die zu verstellende Fahrzeugbaugruppe strukturell und ist integraler Bestandteil der auf den Crashfall ausgelegten Strukturkomponente 13 der zu verstellenden Fahrzeugbaugruppe.

Im Ausführungsbeispiel der Fig. 4 bis 8 ist die Verstellschnecke 20 des Verstellgetriebes der erfindungsgemäßen Verstellvorrichtung 10' nicht unmittelbar an der Strukturkomponente 13 gelagert, sondern mittelbar über ein separates Verstellgetriebegehäuse 27.

Das separate Verstellgetriebegehäuse 27 der Verstellvorrichtung 10' des Ausführungsbeispiels der Fig. 4 bis 8 ist unmittelbar an der Strukturkomponente 13 der zu verstellenden Fahrzeugbaugruppe gelagert, die Verstellschnecke 20 hingegen ist über das separate Verstellgetriebegehäuse 27 mittelbar an dieser Strukturkomponente 13 gelagert.

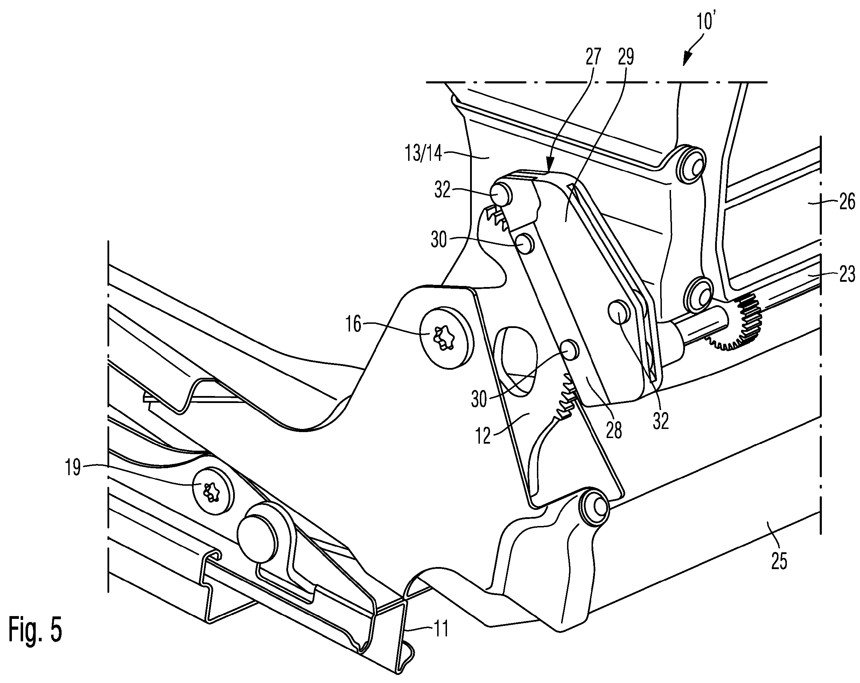

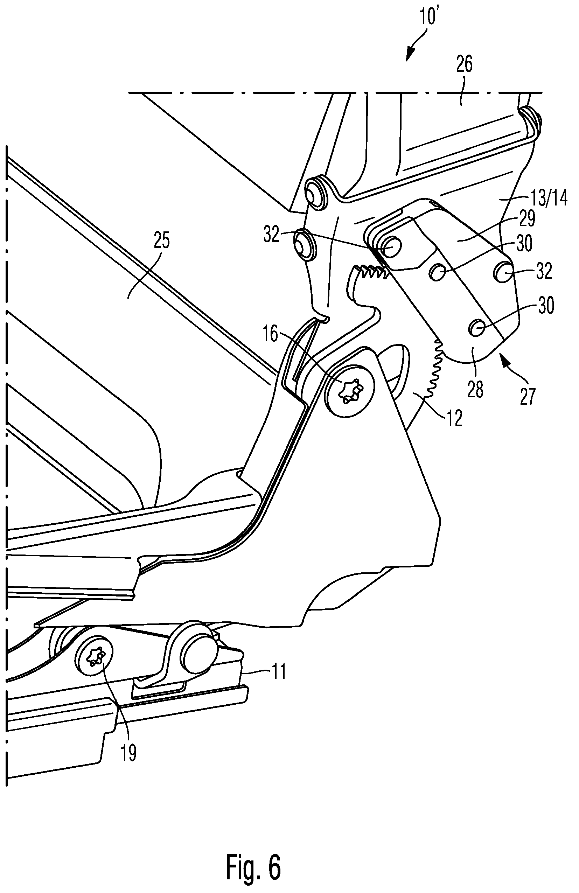

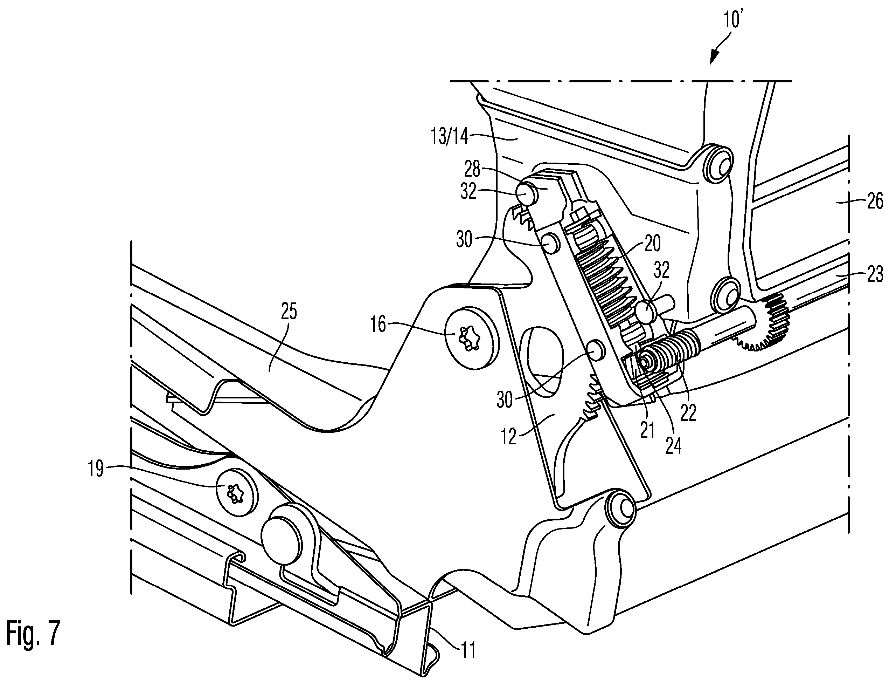

Das separate Verstellgetriebegehäuse 27 ist im Ausführungsbeispiel der Fig. 4 bis 8 zweiteilig aus zwei Gehäuseteilen 28 und 29 gebildet. In Fig. 5 und 6 sind beide Gehäuseteile 28 und 29 des Verstellgetriebegehäuses 27 sichtbar, in Fig. 7 ist das Gehäuseteil 29 entfernt, um den Blick auf die Verstellschnecke 20, die Welle 24, das Zahnrad 21 und die Antriebsschnecke 22 freizugeben.

Im separaten Verstellgetriebegehäuse 27 sind demnach die Welle 24 zusammen mit dem auf der Welle 24 befestigten Zahnrad 21 und der auf der Welle 24 befestigten Verstellschnecke 20 aufgenommen, wobei das Verstellgetriebegehäuse 27 unmittelbar an der Strukturkomponente 13 der zu verstellenden Fahrzeugbaugruppe gelagert ist, nämlich derart, dass das Verstellgetriebegehäuse 27 zwischen den beiden im Wesentlichen parallel zueinander verlaufenden, plattenartigen Tragelementen 14 und 15 der Strukturkomponente 13 angeordnet und unmittelbar an denselben gelagert ist.

An dieser Stelle sei darauf hingewiesen, dass abhängig von der Auslegung des Verstellgetriebegehäuses 27 unter Umständen auf eines der plattenartigen Tragelemente der Strukturkomponente 13, nämlich das plattenartige Tragelement 15, verzichtet werden kann. Bevorzugt ist jedoch die in Fig. 4 bis 8 gezeigte Variante, in welcher die Strukturkomponente 13 beide plattenartigen Tragelemente 14 und 15 umfasst.

Das separate Verstellgetriebegehäuse 27, nämlich das Gehäuseteil 28 desselben, umfasst Vorsprünge 30, die formschlüssig in Ausnehmungen 31 der Tragstruktur 13 eingreifen. Vorzugsweise sind an beiden Seiten des Gehäuseteils 28 die Vorsprünge 30 ausgebildet, wobei dann diese Vorsprünge 30 in Ausnehmungen in beiden plattenartigen Tragelementen 14 und 15 der Tragstruktur 13 eingreifen.

Zusätzlich zu dieser formschlüssigen Fixierung des separaten Verstellgetriebegehäuses 27 an der Tragstruktur 13 sind Befestigungsmittel 32 vorhanden, die ebenfalls der Lagerung des separaten Verstellgetriebegehäuses 27 an der Strukturkomponente 13 dienen. So sind diese Befestigungsmittel 32 als Nieten ausgeführt, die sich einerseits durch Ausnehmungen des Verstellgetriebegehäuses 27 und andererseits durch Ausnehmungen der plattenartigen Tragelemente 14 und 15 formschlüssig erstrecken. So kann insbesondere Fig. 5 und 6 entnommen werden, dass ein erstes Befestigungsmittel 32 der formschlüssigen Befestigung des Gehäuseteils 28 an der Strukturkomponente 13 dient, und das ein zweites Befestigungsmittel 32 der Befestigung des Gehäuseteils 29 an der Strukturkomponente 13 der zu verstellenden Fahrzeugbaugruppe dient. Über die vorzugsweise als Nieten ausgebildeten Befestigungsmittel 32 wird die Einheit aus den plattenartigen Tragelementen 14 und 15 der Strukturkomponente 13 und dem zwischen denselben positionierten Verstellgetriebe quer zur Längsrichtung eines Fahrzeugs, in welchem die zu verstellende Fahrzeugbaugruppe verbaut ist, zusammengehalten. Ferner dienen die Befestigungsmittel 32 ebenso wie die Vorsprünge 30 der Aufnahme von Kräften und Momenten.

Das Gehäuseteil 28 des separaten Verstellgetriebegehäuses 27 stellt zusätzlich zu den plattenartigen Tragelementen 14 und 15 weitere seitliche Anschläge für die Zahnschwinge 12 bereit, um ein seitliches Verkippen derselben und damit ein außer Eingriff geraten mit der Verstellschnecke 20 zu verhindern.

So kann insbesondere Fig. 6 entnommen werden, dass die Zahnschwinge 12 in dem Abschnitt, an welchem Zähne derselben ausgebildet sind, abschnittsweise am Gehäuseteil 28 des Verstellgetriebegehäuses 27 seitlich geführt ist, um die Zahnschwinge 12 vor einem seitlichen Verkippen zu schützen.

Hierdurch ist gewährleistet, dass selbst bei hoher Belastung, zum Beispiel in einem Crashfall, die Position der Zahnschwinge 12 relativ zur Verstellschnecke 20, die als Verriegelungsschnecke wirkt, unverändert bleibt.

Eine weitere Besonderheit des Ausführungsbeispiels der Fig. 4 bis 8 besteht darin, dass das plattenartige Tragelement 15 der Strukturkomponente 13 der zu verstellenden Fahrzeugbaugruppe an einem Abschnitt 33 eine Kröpfung 34 ausweist, die das separate Verstellgetriebegehäuse 27 an einem axialen Ende, nämlich am unteren Ende, abschnittsweise umschließt. Hierdurch kann bei hohen Belastungen, insbesondere im Crash-Fall, eine Bewegung der als Verriegelungsschnecke wirkenden Verstellschnecke 20 zusammen mit der Welle 24 in Axialrichtung der Welle 24 verhindert werden. Auch hierdurch wird die als Verriegelungsschnecke wirkende Verstellschnecke 20 im Crash-Fall in ihrer Position gesichert.

Im Ausführungsbeispiel der Fig. 4 bis 8 wird demnach die Axialposition der als Verriegelungsschnecke dienenden Verstellschnecke 20 relativ zur Zahnschwinge 12 einerseits durch die Vorsprünge 30, andererseits durch die Befestigungsmittel 32 und andererseits durch die Kröpfung 34 gewährleistet. Eine Verdrehsicherung bzw. Kippsicherung für die als Verriegelungsschecke wirkende Verstellschnecke 20 relativ zur Zahnschwinge 12 wird durch die formschlüssig wirkenden Vorsprünge 30 sowie die ebenfalls formschlüssig wirkenden Befestigungsmittel 32 realisiert.

Insgesamt kann hierdurch bei einer hohen Belastung ein außer Eingriff geraten von Zahnschwinge 12 und Verstellschnecke 20 realisiert werden, sodass auch im Crashfall die Verstelleinrichtung 10' verriegelt bleibt.

Im Ausführungsbeispiel der Fig. 4 bis 8 sind die Gehäuseteile 28 und 29 des separaten Verstellgetriebegehäuses 27 vorzugsweise aus Gussteile aus einer Magnesiumlegierung gefertigt. Die Vorsprünge 30 sind integraler Bestandteil des Guss-Gehäuseteils 18.

Die Tragelemente 14 und 15 der Tragstruktur 13 sind vorzugsweise aus Aluminium oder Stahl gefertigt. Die Sitzrahmenstruktur 25 und die Lehnenrahmenstruktur 26 sind vorzugsweise aus einer Magnesiumlegierung gegossen.

Die hier vorliegende Erfindung schlägt demnach eine Verstellvorrichtung 10, 10' für eine zu verstellende Fahrzeugbaugruppe wie einen Fahrzeugsitz vor, bei welcher an der Zahnschwinge 12 unmittelbar eine als selbsthemmende Verriegelungsschnecke ausgebildete Verstellschnecke 20 eines Verstellgetriebes angreift, wobei das die als selbsthemmende Verriegelungsschnecke ausgebildete Verstellschnecke 20 umfassende Verstellgetriebe unmittelbar an einer Strukturkomponente 13 der zu verstellenden Fahrzeugbaugruppe gelagert ist und die zu verstellende Fahrzeugbaugruppe strukturell versteift.

Die als Verriegelungsschnecke ausgebildete Verstellschnecke 20 des Verstellgetriebes greift demnach unmittelbar an der Zahnschwinge 12 an.

Das Verstellgetriebe ist integraler Bestandteil einer Strukturkomponente 13 der verstellenden Fahrzeugbaugruppe und überträgt demnach auch im Crashfall Kräfte und Momente und entlastet so andere Strukturkomponenten der verstellenden Fahrzeugbaugruppe.

Alle weiteren Komponenten der Verstellvorrichtung, die zwischen der als Verriegelungsschnecke ausgebildeten Verstellschnecke 20 und dem Verstellmotor positioniert sind, müssen nicht auf den Crashfall dimensioniert werden, sondern nur auf die Verstellfunktion. Die als Verrieglungsschnecke ausgebildete Verstellschnecke 20 ist unmittelbar oder mittelbar an der auf den Crashfall ausgelegten Strukturkomponente der zu verstellenden Fahrzeugbaugruppe angebunden und demnach in dieselbe integriert.

Da die Verriegelung der Verstellvorrichtung 10, 10' unmittelbar an der Zahnschwinge 12 erfolgt, müssen demnach die zwischen der als Verriegelungsschnecke ausgebildeten Verstellschnecke 20 und dem Antriebsmotor ausgebildeten Baugruppen nicht auf den Crashfall sondern nur auf die Verstellfunktion ausgelegt sein. Dadurch können diese Baugruppen kleiner und leichter dimensioniert werden. Hierdurch können weitere Gewichtseinsparungen realisiert werden.

Die erfindungsgemäße Verstellvorrichtung 10, 10' kommt vorzugsweise an einem Fahrzeugsitz zur Anwendung. Ein Fahrzeugsitz verfügt über mehrere Verstellvorrichtungen, so zum Beispiel über eine als Höheneinstellvorrichtung ausgebildete erste Verstellvorrichtung, eine als Sitzneigungsverstelleinrichtung ausgebildete zweite Verstellvorrichtung und eine als Lehnenneigungsverstelleinrichtung ausgebildete dritte Verstellvorrichtung. Vorzugsweise sind sämtliche dieser Verstellvorrichtung wie oben beschrieben ausgeführt.

### Bezugszeichenliste

- 10, 10': Verstellvorrichtung
- 11: Verstellschiene
- 12: Zahnschwinge
- 13: Strukturkomponente
- 14, 14a: Tragelement
- 15: Tragelement
- 16: Bolzen
- 17: Schwinghebel
- 18: Drehgelenk
- 19: Drehgelenk
- 20: Verstellschnecke
- 21: Zahnrad
- 22: Antriebsschnecke
- 23: Flexwelle
- 24: Welle
- 25: Sitzrahmenstruktur
- 26: Lehnenrahmenstruktur
- 27: Verstellgetriebegehäuse
- 28: Gehäuseteil
- 29: Gehäuseteil
- 30: Vorsprung
- 31: Ausnehmung
- 32: Befestigungsmittel
- 33: Abschnitt
- 34: Kröpfung

## Patentansprüche

1. Verstellvorrichtung für eine zu verstellende Fahrzeugbaugruppe mit einem Verstellmotor, der über ein Verstellgetriebe in eine der zu verstellenden Fahrzeugbaugruppe zugeordnete Zahnschwinge eintreibt, wobei das Verstellgetriebe die zu verstellende Fahrzeugbaugruppe strukturell versteift und eine Verstellschnecke (20) des strukturell versteifend wirkenden Verstellgetriebes unmittelbar an der Zahnschwinge (12) angreift, wobei das Verstellgetriebe eine von dem Verstellmotor über eine Flexwelle (23) antreibbare Antriebsschnecke (22) aufweist, die in ein auf einer Welle (24) befestigtes Zahnrad (21) zur Verdrehung der Welle (24) und zur Verdrehung der ebenfalls auf der Welle (24) befestigten Verstellschnecke (20) eintreibt, wobei die Verstellschnecke (20) unmittelbar in die Zahnschwinge (12) eintreibt, wobei die Welle (24) zusammen mit dem auf derselben befestigten Zahnrad (21) und der auf derselben befestigten Verstellschnecke (20) an der auf einen Crashfall ausgelegten Strukturkomponente (13) der zu verstellenden Fahrzeugbaugruppe gelagert ist wobei, eine Achse der Flexwelle (23) orthogonal zu einer Ebene ist, in der sich die Zahnschwinge (12) bewegt.

2. Verstellvorrichtung nach Anspruch 1, **dadurch gekennzeichnet, dass** die Verstellschnecke (20) des Verstellgetriebes als selbsthemmende Verriegelungsschnecke ausgebildet ist.

3. Verstellvorrichtung nach Anspruch 1 oder 2, **dadurch gekennzeichnet, dass** das Verstellgetriebe integraler Bestandteil einer auf einen Crashfall ausgelegten Strukturkomponente (13) der zu verstellenden Fahrzeugbaugruppe ist.

4. Verstellvorrichtung nach Anspruch 3, **dadurch gekennzeichnet, dass** die Strukturkomponente (13) der Fahrzeugbaugruppe, an welcher die Verstellschnecke (20) des Verstellgetriebes gelagert ist, mindestens ein Tragelement (14, 14a, 15) aufweist.

5. Verstellvorrichtung nach Anspruch 4, **dadurch gekennzeichnet, dass** die Zahnschwinge (12) zumindest abschnittsweise zwischen mindestens zwei im Wesentlichen parallel zueinander verlaufenden plattenartigen Tragelementen (13, 14) der Strukturkomponente (13) positioniert und an denselben gelagert ist, wobei die plattenartigen Tragelemente (13, 14) seitliche Anschläge für die Zahnschwinge (12) bilden und so ein seitliches Verkippen derselben verhindern.

6. Verstellvorrichtung nach Anspruch 1, **dadurch gekennzeichnet, dass** die Welle (24) zusammen mit dem auf derselben befestigten Zahnrad (21) und der auf derselben befestigten Verstellschnecke (20) zwischen mindestens zwei Tragelementen (14, 14a, 15) der auf einen Crashfall ausgelegten Strukturkomponente (13), die ein Verstellgetriebegehäuse für das Verstellgetriebe bilden, positioniert und an denselben unmittelbar gelagert ist.

7. Verstellvorrichtung nach Anspruch 1, **dadurch gekennzeichnet, dass** das Verstellgetriebe ein separates Verstellgetriebegehäuse (27) umfasst, in welchem die Welle (24) zusammen mit dem auf derselben befestigten Zahnrad (21) und der auf derselben befestigten Verstellschnecke (20) aufgenommen ist, wobei das separate Verstellgetriebegehäuse (27) integraler Bestandteil der auf den Crashfall ausgelegten Strukturkomponente (13) ist und dieselbe insbesondere im Crashfall strukturell versteift.

8. Verstellvorrichtung nach Anspruch 7, **dadurch gekennzeichnet, dass** das separate Verstellgetriebegehäuse (27) an mindestens einem plattenartigen Tragelement, vorzugsweise zwischen mindestens zwei im Wesentlichen parallel zueinander verlaufenden plattenartigen Tragelementen (14, 15), einer auf einen Crashfall ausgelegten Strukturkomponente (13) der zu verstellenden Fahrzeugbaugruppe unmittelbar gelagert ist.

9. Verstellvorrichtung nach Anspruch 8, **dadurch gekennzeichnet, dass** das separate Verstellgetriebegehäuse (27) Vorsprünge (30) aufweist, die in Ausnehmungen (31) des oder jedes plattenartigen Tragelements (14, 15) formschlüssig eingreifen.

10. Verstellvorrichtung nach Anspruch 8 oder 9, **dadurch gekennzeichnet, dass** Befestigungsmittel (32) in Ausnehmungen des separaten Verstellgetriebegehäuses (27) und in Ausnehmungen des oder jedes plattenartigen Tragelements (14, 15) formschlüssig eingreifen.

11. Verstellvorrichtung nach einem der Ansprüche 8 bis 10,
**dadurch gekennzeichnet, dass** mindestens eines der plattenartigen Tragelemente (15) an einem Abschnitt eine Kröpfung (34) aufweist, die das separate Verstellgetriebegehäuse (27) an einem axialen Ende teilweise umschließt.

12. Verstellvorrichtung nach einem der Ansprüche 9 bis 11,
**dadurch gekennzeichnet, dass** das separate Verstellgetriebegehäuse (27) seitliche Anschläge für die Zahnschwinge (12) bildet und so ein seitliches Verkippen derselben verhindert.

13. Fahrzeugsitz, mit einer Sitzauflage, einer Rückenlehne, einer als Höheneinstellvorrichtung ausgebildeten ersten Verstellvorrichtung, einer als Sitzneigungsverstelleinrichtung ausgebildeten zweiten Verstellvorrichtung und einer als Lehnenneigungsverstelleinrichtung ausgebildeten dritten Verstellvorrichtung, **dadurch gekennzeichnet, dass** die Höheneinstellvorrichtung und/oder die Sitzneigungsverstelleinrichtung und/oder die Lehnenneigungsverstelleinrichtung nach einem oder mehreren der Ansprüche 1 bis 12 ausgebildet ist.

## Claims

1. Adjustment device for a vehicle assembly to be adjusted having a variable displacement motor which drives into a toothed rocker allocated to the vehicle assembly to be adjusted via a variable speed gear unit, wherein the variable speed gear unit structurally stiffens the vehicle assembly to be adjusted and an adjusting screw (20) of the variable speed gear unit which acts in a structurally stiffening manner acts directly on the toothed rocker (12), wherein the variable speed gear unit has a worm screw (22) which is able to be driven by the variable displacement motor via a flex-shaft (23), said worm screw driving into a gear wheel (21) fastened to a shaft (24) for the rotation of the shaft (24) and for the rotation of the adjusting screw (20) which is likewise fastened to the shaft (24), wherein the adjusting screw (20) drives directly into the toothed rocker (12), wherein the shaft (24), together with the gear wheel (21) fastened to the same and the adjusting screw (20) fastened to the same, is mounted on the structural component (13) of the vehicle assembly to be adjusted, said structural component being designed for the event of a crash, wherein an axis of the flex-shaft (23) is orthogonal to a plane in which the toothed rocker (12) moves.

2. Adjustment device according to claim 1, **characterised in that** the adjusting screw (20) of the variable speed gear unit is formed as a self-locking locking screw.

3. Adjustment device according to claim 1 or 2, **characterised in that** the variable speed gear unit is an integral component of a structural component (13) of the vehicle assembly to be adjusted, said structural component being designed for the event of a crash.

4. Adjustment device according to claim 3, **characterised in that** the structural component (13) of the vehicle assembly, on which the adjusting screw (20) of the variable speed gear unit is mounted, has at least one supporting element (14, 14a, 15).

5. Adjustment device according to claim 4, **characterised in that** the toothed rocker (12) is positioned at least in sections between at least two panel-type supporting elements (13, 14) of the structural component (13) which run substantially in parallel to each other and is mounted on the same, wherein the panel-type supporting elements (13, 14) form lateral stops for the toothed rocker (12) and therefore prevent a lateral tipping of the same.

6. Adjustment device according to claim 1, **characterised in that** the shaft (24), together with the gear wheel (21) fastened to the same and the adjusting screw (20) fastened to the same, is positioned between at least two supporting elements (14, 14a, 15) of the structural component (13), which is designed for the event of a crash and which forms a variable speed gear unit housing for the variable speed gear unit, and is mounted directly on the same.

7. Adjustment device according to claim 1, **characterised in that** the variable speed gear unit comprises a separate variable speed gear unit housing (27) in which the shaft (24), together with the gear wheel (21) fastened to the same and the adjusting screw (20) fastened to the same, is received, wherein the separate variable speed gear unit housing (27) is an integral component of the structural component (13) designed for the event of a crash and structurally stiffens the same in the event of a crash.

8. Adjustment device according to claim 7, **characterised in that** the separate variable speed gear unit housing (27) is mounted directly on at least one panel-type supporting element, preferably between at least two panel-type supporting elements (14, 15) which run substantially in parallel to each other, of a structural component (13) of the vehicle assembly to be adjusted, said structural component being designed for the event of a crash.

9. Adjustment device according to claim 8, **characterised in that** the separate variable speed gear unit housing (27) has protrusions (30) which engage with recesses (31) of the or each panel-type supporting element (14, 15) in a positive manner.

10. Adjustment device according to claim 8 or 9, **characterised in that** fastening means (32) engage in recesses of the separate variable speed gear unit housing (27) and in recesses of the or each panel-type supporting element (14, 15) in a positive manner.

11. Adjustment device according to one of claims 8 to 10, **characterised in that** at least one of the panel-type supporting elements (15) has a crank (34) on one section, said crank partially enclosing the separate variable speed gear unit housing (27) on an axial end.

12. Adjustment device according to claims 9 to 11, **characterised in that** the separate variable speed gear unit housing (27) forms lateral stops for the toothed rocker (12) and therefore prevents a lateral tipping of the same.

13. Vehicle seat having a seat cover, a backrest, a first adjustment device formed as a height adjustment device, a second adjustment device formed as a seat inclination adjustment device and a third adjustment device formed as a backrest inclination adjustment device, **characterised in that** the height adjustment device and/or the seat inclination adjustment device and/or the backrest inclination adjustment device is formed according to one or more of claims 1 to 12.

## Revendications

1. Dispositif de réglage d'un composant de véhicule devant être réglé comprenant un moteur de réglage qui actionne par l'intermédiaire d'une transmission de réglage bielle oscillante dentée associée au composant du véhicule devant être réglé,
la transmission de réglage rigidifiant la structure du composant du véhicule devant être réglé, et une vis sans fin de réglage (20) de la transmission de réglage de rigidification de structure venant directement en prise sur la bielle dentée (12), la transmission de réglage comprenant une vis sans fin d'entraînement (22) pouvant être entraînée par le moteur de réglage par l'intermédiaire d'un câble flexible (23) et qui actionne une roue dentée (21) fixée sur un arbre (24) pour déplacer cet arbre (24) en rotation et déplacer en rotation la vis sans fin de réglage (20) qui est également fixée sur l'arbre (24), la vis sans fin de réglage (20) actionnant directement la bielle dentée (12), l'arbre (24) étant monté, avec la roue dentée (21) fixée sur celui-ci et la vis sans fin de réglage (20) également fixée sur celui-ci sur un élément de structure (13) du composant du véhicule devant être réglé prévu en cas de collision, l'axe du câble flexible (23) étant perpendiculaire à un plan dans lequel se déplace la bielle dentée (12).

2. Dispositif de réglage conforme à la revendication 1,
**caractérisé en ce que**
la vis sans fin de réglage (20) de la transmission de réglage est réalisée sous la forme d'une vis sans fin de verrouillage autobloquante.

3. Dispositif de réglage conforme à la revendication 1 ou 2,
**caractérisé en ce que**
la transmission de réglage est un élément faisant partie intégrante d'un élément de structure (13) du composant du véhicule devant être réglé prévu en cas de collision.

4. Dispositif de réglage conforme à la revendication 3,
**caractérisé en ce que**
l'élément de structure (13) du composant de véhicule sur lequel est montée la vis sans fin de réglage (20) de la transmission de réglage comprend au moins un élément support (14, 14a, 15).

5. Dispositif de réglage conforme à la revendication 4,
**caractérisé en ce que**
la bielle dentée (12) est située au moins par segments entre au moins deux éléments-support (13, 14) en forme de plaques de l'élément de structure (13) s'étendant essentiellement parallèlement l'un à l'autre et est monté sur ceux-ci, ces éléments-support en forme de plaques (13, 14) formant des butées latérales pour la bielle dentée (12) et empêchant ainsi un basculement de celle-ci.

6. Dispositif de réglage conforme à la revendication 1,
**caractérisé en ce que**
l'arbre (24) est positionné avec la roue dentée (21) fixée sur celui-ci et la vis sans fin de réglage (20) également fixée sur celui-ci entre au moins deux éléments-support (14, 14a, 15) de l'éléments de structure (13) prévu en cas de collision, qui forment un boîtier de transmission de réglage pour la transmission de réglage, et est monté directement sur celui-ci.

7. Dispositif de réglage conforme à la revendication 1,
**caractérisé en ce que**
la transmission de réglage comprend un boîtier de transmission de réglage séparé (27) dans lequel est logé l'arbre (24), avec à la roue dentée (21) fixée sur celui-ci et la vis sans fin de réglage (20) également fixée sur celui-ci, ce boîtier de transmission de réglage séparé (27) étant un élément faisant partie intégrale de l'élément de structure (13) prévu en cas de collision, et rigidifiant sa structure en particulier en cas de collision.

8. Dispositif de réglage conforme à la revendication 7,
**caractérisé en ce que**
le boîtier de transmission de réglage séparé (27) est monté directement sur au moins un élément-support en forme de plaque, de préférence entre au moins deux éléments-support en forme de plaques (14, 15) s'étendant essentiellement parallèlement d'un élément de structure (13) du composant de véhicule devant être réglé prévu en cas de collision.

9. Dispositif de réglage conforme à la revendication 8,
**caractérisé en ce que**
le boîtier de réglage séparé (27) comporte des saillies (30) qui viennent en prise par une liaison par la forme dans des évidements (31) du ou de chaque élément-support (14, 15) en forme de plaque.

10. Dispositif de réglage conforme à la revendication 8 ou 9,
**caractérisé en ce que**
des moyens de fixation (32) viennent en prise par une liaison par la forme dans des évidements du boîtier de transmission de réglage séparé (27) et dans des évidements du ou de chaque élément-support en forme de plaque (14, 15).

11. Dispositif de réglage conforme à l'une des revendications 8 à 10,
**caractérisé en ce qu'**
au moins l'un des éléments-support en forme de plaque (15) comprend, sur un segment un coude (34) qui entoure partiellement le boîtier de transmission de réglage séparé (27) à une extrémité axiale.

12. Dispositif de réglage conforme à l'une des revendications 9 à 11,
**caractérisé en ce que**
le boîtier de transmission de réglage (27) forme des butées latérales pour la bielle dentée (12) et empêche ainsi un basculement latérale de cette bielle.

13. Siège de véhicule comprenant une assise, un dossier arrière, un premier dispositif de réglage réalisé sous la forme d'un dispositif de réglage de hauteur, un second dispositif de réglage réalisé sous la forme d'un dispositif de réglage de l'inclinaison d'assise et un troisième dispositif de réglage réalisé sous la forme d'un dispositif de réglage de l'inclinaison du dossier,
**caractérisé en ce que**
le dispositif de réglage de hauteur et/ou le dispositif de réglage de l'inclinaison d'assise et/ou le dispositif de réglage de l'inclinaison de dosser sont réalisés conformément à l'une ou plusieurs des revendications 1 à 12.
